# EUROPÄISCHE PATENTANMELDUNG

(11) **EP 2 151 398 A1**
(43) Veröffentlichungstag der Anmeldung: **10.02.2010**
(21) Anmeldenummer: 09009438.4
(22) Anmeldetag: 21.07.2009
(51) Int. Cl.: B65D 63/10, B65D 69/00, F16B 15/00, F16B 15/08

(54) **Vorrat und Transportvorrichtung von Verschlussklammern**

(30) Priorität: 06.08.2008 DE 202008010479 U
(71) Anmelder: Tipper Tie technopack GmbH, 21509 Glinde (DE)
(72) Erfinder: Bogun, Thomas, 23879 Mölln/Lauenburg (DE)
(74) Vertreter: Glawe, Delfs, Moll

(57) **Zusammenfassung**

Die Erfindung betrifft die Verpackungstechnik, und zwar das Verschließen schlauchförmiger Verpackungen mittels U-förmiger Verschlussklammern. Die Verschlussklammern (1) sind über flexible Materialstreifen (2) zu Vorräten zusammengefasst. Die Erfindung ermöglicht eine besonders dichte Packung, so dass große Vorräte gebildet werden können, und geeignete Transportvorrichtungen für endungsgemäß magazinierte Verschlussklammern.

## Beschreibung

Die Erfindung betrifft einen Vorrat von U-förmigen Verschlussklammern nach dem Oberbegriff des Patentanspruchs 1 sowie eine Vorrichtung zum Transport solcher Klammern nach dem Oberbegriff des Patentanspruchs 12.

Gattungsgemäße Verschlussklammern dienen dem Verschluss schlauchförmiger Verpackungen, indem ihre Enden um das geraffte Ende der Verpackung gebogen werden. Dies geschieht normalerweise in einer Verschließmaschine dadurch, dass die Verschlussklammern in die Bewegungsbahn eines Stempels geführt werden, um von dort vom Stempel so zu einer Verschließstelle auf einer Matrize mitgenommen zu werden, dass die Beine zunächst den von der Maschine bereits gerafften Schlauchabschnitt umgreifen und dann auf der Matrize durch die Kraft des Stempels zusammengebogen werden.

Zur Verarbeitung großer Stückzahlen mit einem hohen Automatisierungsgrad werden die Verschlussklammern nicht von Hand in die Stempelbahn gelegt. Vielmehr werden sie in Vorräten zusammengefasst und dann mit Transportvorrichtungen in die Stempelbahnen gebracht, so dass der Stempel die jeweils vorderste Klammer des Vorrats mitnehmen kann.

Für die Bildung solcher Vorräte sind zwei Techniken bekannt. In beiden Fällen sind die Verschlussklammern an flexiblen Materialstreifen, z.B. Klebeband, aufgereiht. Im einen Fall sind die Verschlussklammern in Reihen aufgeteilt, die möglichst kompakt in einer Schachtel zusammengepackt sind. Die Verschlussklammern jeder Reihe sind über jeweils einen flexiblen Materialstreifen untereinander verbunden. Diese Anordnung wird jedoch als nachteilig angesehen, da die Bedienperson bei der Zufuhr der Verschlussklammern zur Verschlussmaschine ständig neue Abschnitte nachlegen muss. Dies ist für eine Automatisierung abträglich, so dass bereits komplizierte und Platz verbrauchende Konstruktionen wie Speichertrommeln vorgeschlagen worden sind, die das ständige Nachlegen erübrigen sollen (z.B. DE 23 39 560 A1). Abgesehen von der Komplexität solcher Anlagen müssen die einzelnen Reihen von Verschlussklammern immer noch von Hand aus der Schachtel entnommen werden. Dieser Nachteil besteht nicht bei der anderen Technik, bei dem ein langer flexibler Materialstreifen auf einer Vorratsrolle aufgerollt wird (z.B. DE 32 44 979 C2). Jedoch besteht bei dieser Technik ein Logistikproblem. Zum einen benötigen die voluminösen Vorratsrollen mehr Platzbedarf bei der Lagerung. Zum anderen müssen die leeren Rollen aufwendig entsorgt oder rücktransportiert werden.

Der Erfindung liegt die Aufgabe zugrunde, einen gattungsgemäßen Vorrat zu schaffen, der einen hohen Automatisierungsgrad ermöglicht und ohne voluminöse Trägerkomponenten auskommt. Sie löst dies durch die Merkmale des Patentanspruchs 1. Vorteilhafte Weiterbildungen sind in den darauf bezogenen Unteransprüchen beschrieben.

Unter U-förmigen Verschlussklammern für schlauchförmige Verpackungen sind Klammern aus beliebigem Material, vorzugsweise aus Metall-, insbesondere Aluminiumdraht, zu verstehen, die mit ihren Enden das geraffte Ende eines gerafften Verpackungsschlauchs umgreifen (s. etwa Fig. 1 der z.B. DE-OS 1 959 755) und durch Verbiegen der Enden verschließen können. Die Enden solcher Klammern sind vorzugsweise stumpf, insbesondere abgeflacht oder abgerundet, um ein Eindringen in das Verpackungsmaterial und damit dessen Beschädigung zu verhindern. Die Stirnseiten der Klammern sind ihre Seiten in beiden Blickrichtungen parallel zur Schlauchachse.

Eine Reihe im Sinne der Erfindung umfasst mindestens 20, vorzugsweise mindestens 100, weiter vorzugsweise mindestens 200 Verschlussklammern. Zwei Reihen liegen parallel im Sinne des Hauptanspruchs, wenn sie parallel, jedoch nicht auf derselben Geraden verlaufen.

Ein flexibler Materialstreifen kann beliebig ausgeführt sein. Er muss hinreichend breit sein, um eine Haftung der Verschlussklammern daran zu ermöglichen. Er muss hinreichend reißfest sein, um eine gewisse Zugbelastung, wie sie insbesondere durch das Eigengewicht von Klammern entsteht, aushalten zu können. Vorzugsweise handelt es sich beim flexiblen Materialstreifen um ein Klebeband.

Der Materialstreifen kann aber auch aus mehreren Komponenten gebildet sein. So bietet es sich insbesondere bei besonders langen Vorräten, bei denen der Materialstreifen unter Umständen große axiale Kräfte aufnehmen muss, an, zur Verstärkung der axialen Reißfestigkeit zusätzlich einen Faden aus Baumwolle, Nylon oder einem anderen Kunststoff vorzusehen. Dieser Faden kann vorzugsweise zwischen ein Klebeband und die Verschlussklammern eingelegt werden, so dass er seitlich vom Klebeband überdeckt und somit zu den Seiten hin eingeschlossen wird.

Eine solche Verstärkung muss sich nicht unbedingt über den gesamten Materialstreifen erstrecken, sondern kann z.B. auf die Abschnitte beschränkt sein, in denen der Materialstreifen zur Erreichung einer kompakten Packung gefaltet oder verdrillt werden muss und deshalb einer besonderen Belastung ausgesetzt ist. Es ist also nicht erforderlich, dass der Materialstreifen über seine gesamte Länge in gleicher Weise ausgeführt ist. Vielmehr können die verwendeten Materialen abschnittsweise wechseln, um den Streifen den jeweiligen an den einzelnen Abschnitten herrschenden Anforderungen, insbesondere an Reißfestigkeit und Flexibilität, anzupassen. So ist es auch denkbar, den Materialstreifen außerhalb von Abschnitten, in denen Faltungen oder Verdrillungen vorgesehen sind und der Streifen dementsprechend flexibel sein muss, vergleichsweise steif auszubilden.

Unter den Begriff des flexiblen Materialstreifens fallen auch mehrere, voneinander unabhängige, aber parallele Materialstreifen, die an verschiedenen Stellen der Verschlussklammern ansetzen können, beispielsweise an den beiden Enden der Klammern. Hierbei muss nicht jeder Streifen durchgängig sein, solange der gesamte, aus den unabhängigen Streifen zusammengesetzte Materialstreifen durchgängig ist. So kann beispielsweise bei Reihen mit jeweils 200 Verschlussklammern ein Streifen an den linken Enden der 1. bis 200. Klammer, ein weiterer an den rechten Enden der 101. bis 300. Klammer, ein weiterer an den linken Enden der 201. bis 400. Klammer usw. haften, wobei sich jeweils zwischen den Reihen eine Faltung befindet. Bevorzugt ist allerdings ein einziger unabhängiger Materialstreifen, besonders weil dies das Ablösen des Materialstreifens von den Verschlussklammern erleichtert, wenn dies gewünscht ist. Es ist ferner bevorzugt, dass die Verschlussklammern jeweils mit ihrer gleichen Stelle an dem flexiblen Materialstreifen haften. Denn dies erleichtert es, über den Streifen eine Zugkraft auf den erfindungsgemäßen Vorrat zum Zweck des Transports auszuüben.

Das Haften der Verschlussklammern am Materialstreifen kann beliebig bewerkstelligt werden. Bevorzugt ist eine lösbare Verbindung, die insbesondere durch Kleben erreicht werden kann.

Bevorzugt haften die Verschlussklammern mit ihren Klammerrücken an dem flexiblen Materialstreifen. Der Klammerrücken einer Verschlussklammer ist dabei ihre Seite in Blickrichtung ihrer um den Verpackungsschlauch zu biegenden Enden auf die Enden zu. Hierbei hat eine Anbringung des Streifens an der dem gerafften Verpackungsschlauch zuzuwendenden Innenseite Vorteile, wenn die Verschlussklammern in der Verschließmaschine auf einer Schiene so geführt werden, dass sie mit ihren Enden die Schiene umgreifen. Denn der flexible Materialstreifen liegt dann auf der Schiene auf. Er kann so den Abrieb verringern und neigt bei Stauchungen der Klammerreihe weniger zum Ausbauchen. Denkbar ist aber auch eine Anbringung des Streifens an einem oder beiden Enden der Klammern.

Eine Reihe von Verschlussklammern ist normalerweise so ausgebildet, dass sich die Verschlussklammern an ihren Stirnseiten berühren. In diesem Fall sind besonders kompakte Packungen möglich, und die Klammern können sich, wenn sie auf einer Schiene sitzen, gegenseitig anschieben. Falls eine Berührung der Verschlussklammern untereinander unerwünscht ist, etwa um Abrieb zu verhindern, ist auch eine geringfügige Beanstandung denkbar.

Die Klammertiefe einer Verschlussklammer ist ihre Ausdehnung parallel zur Achse des Verpackungsschlauchs. Falls die Ausdehnung nicht an allen Stellen der Klammer dieselbe ist, ist die Ausdehnung des an dem flexiblen Materialstreifen anliegenden Abschnitts maßgeblich.

Der flexible Materialstreifen weist zwischen Klammerreihen vorzugsweise klammerfreie Abschnitte auf, die mindestens so lang sind wie ein Klammerende. Hierdurch sind Faltungen möglich, mit denen sich besonders kompakte Packungen des Vorrats erreichen lassen.

Vorteilhafterweise sind die Reihen der Verschlussklammern jeweils gleich lang. Dies ermöglicht besonders kompakte Packungen. Gleiche Längen müssen nicht bedeuten, dass die Klammerzahlen in den Abschnitten jeweils identisch sind. Toleranzen in den Klammerabmessungen und Klammerabständen können dazu führen, dass die Klammerzahlen trotz gleicher Längen Abschnitte voneinander abweichen. Gleich lang sind zwei Abschnitte auch dann noch, wenn sich ihre Längen durch maximal eine Klammertiefe unterscheiden.

Vorteilhafterweise allerdings weisen die Reihen die gleichen Klammerzahlen auf. In diesem Fall ist auf einfache Weise gewährleistet, dass ihre Längen einander im Wesentlichen entsprechen.

Entsprechen die Längen der bestückten Abschnitten im Wesentlichen einander, so ist es besonders vorteilhaft, wenn die Verschlussklammern durch Faltung des flexiblen Materialstreifens so zusammengelegt sind, dass der Außenumfang des Vorrats einem geraden Prisma entspricht, dessen Höhe ein ganzzahliges Vielfaches der Länge der Reihen ist. In diesem Fall ergibt sich eine besonders kompakte Packung des Vorrats, und die Grund- oder Deckfläche kann als Liegefläche beim Lagern dienen. Bevorzugt ist das ganzzahlige Vielfache eins, so dass die Packung besonders kompakt ist.

Vorteilhafterweise ist das gerade Prisma ein Quader. Dies erleichtert die kompakte Stapelung von mehreren Vorräten, worin ein besonderer Vorteil der Erfindung gegenüber vorbekannten Vorratsrollen liegt.

Vorteilhafterweise ist entlang des Prismenmantels eine Umhüllung vorgesehen. Dies ermöglicht eine Stabilisierung des gesamten Vorrats für Transport und Lagerung. Die Umhüllung kann beispielsweise in einer oder mehreren Wicklungen einer Kunststofffolie bestehen, in die noch ein Etikett eingelegt werden kann. Eine solche Verpackung des Vorrats ist äußerst material-, gewichts- und raumsparend und hält die Entsorgungsprobleme in engen Grenzen.

Besonders vorteilhaft ist es, die Umhüllung durch eine Schachtel zu bilden. Dabei kann es sich um eine für die Verpackung vorbekannter vereinzelter Reihen bereits bekannte Schachtel handeln. Sie kann z.B. aus Pappe und/oder Kunststoff bestehen. Mit ihr wird ebenfalls auf material-, gewichts- und raumsparende Weise und ohne wesentliches Entsorgungsproblem eine kompakte Packung erreicht.

Mehrere erfindungsgemäß ausgestaltete Vorräte können auch von einer einzigen Umhüllung umfasst werden. So ist es denkbar, mehrere in einer Ebene serpentinenartig gefaltete, aber nicht miteinander verbundene Vorräte in einer Schachtel übereinander zu stapeln.

Bei erfindungsgemäß ausgestalteten Vorräten stellt sich das Problem der automatisierten Zufuhr zur Verschließmaschine. Von Vorratsrollen her ist es bekannt, die Rolle um ihre Achse drehbar zu lagern und auf das freie Ende des Vorrats eine Zugkraft auszuüben (DE 32 44 979 C2). Die Krafteinleitung geschieht im Stand der Technik über eine an der Maschine angeordnete Klinke, die in die Zwischenräume zwischen den Verschlussklammern eingreift und dann über die einzelnen Klammern den ganzen Vorrat zieht. Dieses Prinzip erfordert einen regelmäßigen Abstand zwischen den Klammern und versagt folglich, wenn der Materialstreifen größere klammerfreie Abschnitte aufweist, wie es die Erfindung zumindest bei längeren, kompakt gefalteten Vorräten mit sich bringt.

Aufgabe der Erfindung ist daher auch, die automatisierte Zufuhr erfindungsgemäßer Vorräte zu einer Verschließmaschine zu ermöglichen. Sie löst dies durch die Merkmale des Patentanspruchs 12. Vorteilhafte Weiterbildungen sind in den darauf bezogenen Unteransprüchen beschrieben.

Eine Schiene ist hierbei jeglicher Gegenstand und jegliche Anordnung von Gegenständen, der es ermöglicht bzw. die es ermöglichen, den Vorrat von Verschlussklammern für eine Transversalbewegung entlang der Längserstreckung des Vorrats zu führen. Die Bewegung muss nicht geradlinig sein, sondern kann auch Kurven durchlaufen. Ihr kann auch eine Rotationsbewegung überlagert sein, wenn die Platzverhältnisse in der Verschließmaschine dies erfordern.

Ein Antriebsmittel im Sinne der Erfindung ist ein beliebig ausgestalteter Antrieb mit geeigneten Kraftübertragungselementen, der geeignet ist, den Vorrat mittels einer Zugkraft in Bewegung zu setzen. Krafteinleitungsmittel ist das Kraftübertragungselement, das unmittelbar mit dem flexiblen Materialstreifen in Berührung kommt.

Die Einleitung der Zugkraft in den flexiblen Materialstreifen hat zur Folge, dass sie unabhängig von den Lücken zwischen den Klammern aufgrund klammerfreier Abschnitte des Materialstreifens ausgeübt werden kann. Sofern die Krafteinleitung auch in die Klammern erfolgt, ist das unschädlich, solange die Krafteinleitung über den Streifen genügt, um den Vorrat anzutreiben. Bevorzugt ist allerdings, dass die Krafteinleitung ausschließlich über den Materialstreifen erfolgt. Dann ist am ehesten eine zuverlässige Funktion gewährleistet.

Vorteilhafterweise umfasst das Krafteinleitungsmittel eine Rolle. Dies ermöglicht eine besonders einfache Konstruktion. Es können auch mehrere Rollen vorgesehen sein, insbesondere zwei, die an gegenüberliegenden Seiten des Vorrats angeordnet sind. Wenn beispielsweise der flexible Materialstreifen durch je ein an der Innen- und Außenseite angeordnetes Klebeband gebildet ist, bietet es sich an, an jeder Seite eine Rolle anzuordnen.

Wenn die Rolle die Zugkraft über ihren Außenumfang in den flexiblen Materialstreifen einleitet, sollte sie am Außenumfang hinreichend reibfest sein. Hierzu kann eine geeignete Profilierung vorgesehen werden, beispielsweise Querrillen. Vorteilhafterweise ist der flexible Materialstreifen des erfindungsgemäßen Vorrats an seinem äußeren, für den Kontakt mit der Rolle bestimmten Bereich ebenfalls mit einer Profilierung versehen, die vorteilhafterweise ebenfalls Querrillen besteht, die mit Querrillen auf der Rolle formschlüssig zusammenwirken können. Anstelle der Profilierung ist es auch denkbar, Ausnehmungen im flexiblen Materialstreifen vorzusehen, in die passende Elemente auf dem Rollenrand eingreifen können. So können beispielsweise der flexible Materialstreifen eine Lochung aufweisen und die Rolle als Stachelwalze ausgebildet sein. Die Löcher sind dann kongruent zu den Stacheln und insbesondere kreisförmig, während die Stacheln vorzugsweise eine Kegelform haben.

Vorteilhafterweise ist die erfindungsgemäße Vorrichtung zum Ablösen des flexiblen Materialstreifens von den Verschlussklammern eingerichtet. Im Stand der Technik bleibt normalerweise beim Ablösen der vordersten Klammer aus dem Vorrat ein Stück des Klebebands an der Klammer haften, was an sich unerwünscht ist. Die Erfindung bietet somit eine elegante Lösung, dies zu verhindern. Wenn der Streifen abgelöst ist, liegen die jenseits der Ablösestelle befindlichen Verschlussklammern bereits vereinzelt auf der Schiene auf. Angetrieben werden sie, indem sie von den jeweils nachstoßenden Klammern angeschoben werden. Es ist also kein Antrieb für die aus dem Vorratsverbund herausgelösten Verschlussklammern erforderlich. Außerdem werden in dieser Phase ungünstige Lücken zwischen den Klammern, bedingt durch klammerfreie Abschnitte entlang des Materialstreifens, automatisch beseitigt.

Für diese Ablösung ist es bevorzugt, das Krafteinleitungsmittel so anzuordnen, dass die Einleitung der Zugkraft in den flexiblen Materialstreifen in einer vom Verlauf der Schiene abweichenden Richtung erfolgt, und Führungsmittel vorgesehen sind, die die Verschlussklammern, nicht aber den flexiblen Materialstreifen zwingen, auf der Schiene zu bleiben. In diesem Fall wird der Materialstreifen in einfacher Weise von den Klammern abgelöst. Die Führungsmittel können beliebig ausgestaltet und auch durch die Schiene selbst gebildet sein.

Bevorzugt ist eine Rolle zum Aufwickeln des abgelösten flexiblen Materialstreifens vorgesehen. Auf diese Weise wird der abgelöste Streifen gesammelt und die Gefahr, dass er die Funktion der Verschließmaschine behindert, vermieden. Bei der Rolle kann sich eine Rolle handeln, die zugleich das Krafteinleitungsmittel bildet, so dass keine weitere Komponente benötigt wird. Die Rolle zum Aufwickeln sollte lösbar auf ihrer Halterung sitzen, damit sie, sobald sie mit Streifenmaterial gefüllt ist, ausgewechselt oder auf einfache Weise entleert werden kann.

Vorteilhafterweise weist die zum Ablösen bestimmte Rolle ein Einfädelungsmittel auf, etwa eine Rille, in die ein überstehendes Ende des Materialstreifens gesteckt werden kann. Deshalb ist es auch vorteilhaft, dass der flexible Materialstreifen des erfindungsgemäßen Vorrats an wenigstens einem der Enden des Vorrats mindestens 4 mm, vorzugsweise mindestens 8 mm, von der letzten Verschlussklammer des Vorrats übersteht. Dieses Ende kann wie auch das Einfädelungsmittel können auch weitere Hilfsmittel für das Befestigen des Streifenendes an der Rolle umfassen, beispielsweise Haken oder Einrastorgane.

Nachfolgend werden Ausführungsbeispiele der Erfindung anhand von Zeichnungen näher erläutert. Es zeigen:
- Fig. 1: einen Vorrat nach der Erfindung mit einer um- schließenden Schachtel in Draufsicht;
- Fig. 2: einen weiteren Vorrat nach der Erfindung in Sei- tenansicht;
- Fig. 3: eine erste Ausführungsform einer erfindungsgemä- ßen Transportvorrichtung in Seitenansicht;
- Fig. 4: eine zweite Ausführungsform einer erfindungsgemä- ßen Transportvorrichtung in Seitenansicht;
- Fig. 5: eine dritte Ausführungsform einer erfindungsgemä- ßen Transportvorrichtung in perspektivischer An- sicht;
- Fig. 6: eine vierte Ausführungsform einer erfindungsgemä- ßen Transportvorrichtung in perspektivischer An- sicht.

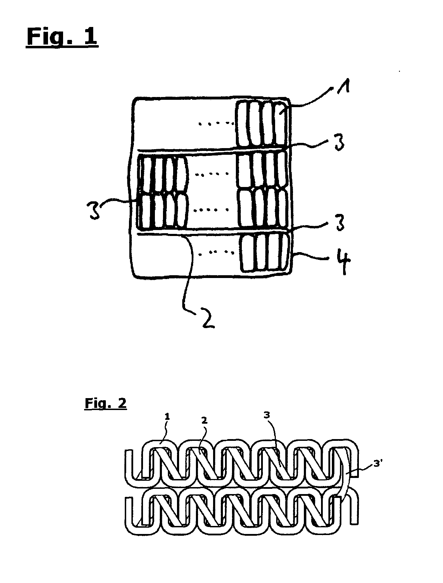

Die Verschlussklammern 1 bilden in Fig. 1 vier parallele Reihen und sind jeweils mit ihren Rücken an einem Klebestreifen 2 angeklebt. Aus Gründen der Übersichtlichkeit sind jeweils nur einige Verschlussklammern 1 stellvertretend für eine große Anzahl und die weiteren, nicht eingezeichneten Klammern durch Punkte angedeutet. Der Klebestreifen 2 ist durchgehend, so dass alle Verschlussklammern 1 des Vorrats miteinander verbunden sind. Er ist zu einer Serpentine gefaltet, damit die Verschlussklammern kompakt gepackt werden können. Bei 3 ist ein klammerfreier Abschnitt des Klebestreifens 2 mit einer Länge von mindestens zwei Klammerenden vorgesehen. Er ermöglicht es, die Verschlussklammern 1 auch an dieser Stelle kompakt zu packen, d.h. die dem klammerfreien Abschnitt benachbarten Klammern 1 stoßen stirnseitig mit ihren Enden aufeinander.

Die Verschlussklammern sind in einer Schachtel mit einer Wand 4 gelegt. Die Wand 4 der Schachtel sorgt für die nötige Stabilität der Anordnung bei der Lagerung. Wiederum aus Gründen der Übersichtlichkeit ist in Fig. 1 eine Ebene der Verschlussklammern des Vorrats eingezeichnet. Parallel dazu außerhalb der Zeichenebene können weitere, nicht dargestellte Lagen in der Schachtel angeordnet sein, die über das Klebeband 2 miteinander verbunden sein können.

Fig. 2 zeigt einen erfindungsgemäßen Vorrat in Blickrichtung parallel zu den Reihen von Verschlussklammern 1, so dass jeweils die vorderste Klammer 1 einer Reihe zu sehen ist. Die Klammerenden greifen so weit wie möglich ineinander, so dass eine besonders kompakte Packung erzielt wird. Der flexible Materialstreifen weist entsprechende kürzere 3 und längere 3' klammerfreie Abschnitte mit Längen von mindestens eines Klammerendes auf, so dass alle Verschlussklammern 1 über den Streifen 2 miteinander verbunden sind.

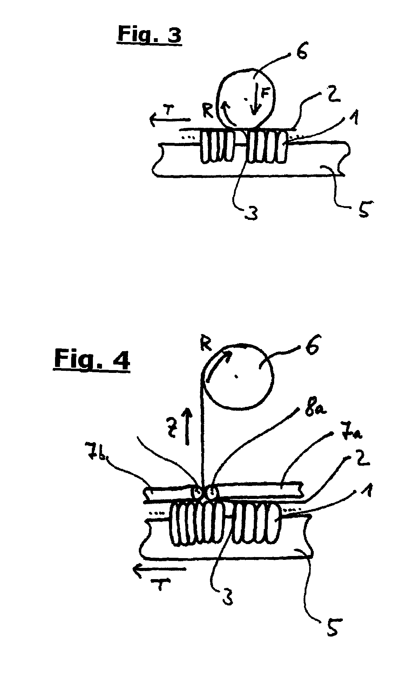

Bei der in Fig. 3 gezeigten erfindungsgemäßen Transportvorrichtung sitzt der Vorrat rittlings auf einem Schienenabschnitt 5, um in Richtung des Pfeils T hin zur eigentlichen Verschließstelle befördert zu werden. Zum Antrieb des Vorrats ist eine Rolle 6 vorgesehen, die sich in Richtung des Pfeils 6 dreht, um von der schienabseitigen Seite des Vorrats auf das auf den Klammerrücken außen aufgeklebte Klebeband 2 zu drücken. Indem die Rolle in erster Linie auf das Band 2 und allenfalls zusätzlich auf die Klammern 1 einwirkt, kann sie ihre Zugkraft auf den Vorrat auch dann ausüben, wenn sich im Berührungspunkt eine klammerfreier Bandabschnitt 3 befindet. Zur Vermeidung von Schlupf ist die Rolle mit einer Federkraft in Richtung des Pfeils F zur Schiene hin vorgespannt. Ebenfalls zur Vermeidung von Schlupf kann das Klebeband 2 oder ein anderweitiger flexibler Materialstreifen mit einer Profilierung an der den Klammern 1 abgewandten Seite versehen sein, vorzugsweise Querrillen parallel zu den Klammerrücken.

Die in Fig. 4 dargestellte erfindungsgemäße Transportvorrichtung zieht beim Fördern des Vorrats zugleich das Klebeband 2 von den Verschlussklammern 1 ab. Im Gegensatz zu Fig. 3 ist sie beabstandet vom Vorrat auf der Schiene 5 angeordnet. Das freie Ende des Klebebands 2 ist in nicht dargestellte Einfädelungsmittel der Rolle 6 eingefädelt, so dass die Rolle beim Drehen in Richtung des Pfeils R das Klebeband 2 aufwickelt. Auf das Klebeband wird dabei eine Zugkraft in Richtung des Pfeils Z ausgeübt. Die Verschlussklammern 1 können jedoch nicht folgen, da sie durch zwei oberhalb ihrer Rücken parallel zur Schiene 5 verlaufender Halteschienen 7a, 7b auf der Schiene 5 gehalten werden. Die Halteschienen 7a, 7b geben in ihrem Zwischenraum nur eine Öffnung für das Klebeband 2 frei, während die Öffnung für die Verschlussklammern 1 zu klein ist. An den öffnungsseitigen Enden der Halteschienen 7a, 7b sind Rollen 8a, 8b angeordnet, um den Banddurchlauf zu erleichtern. Jenseits dieser Stelle sind zwischen den Klammern 1 auf der Schiene 5 keine Lücken mehr vorhanden.

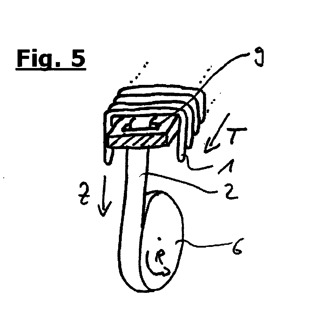

Die in Fig. 5 dargestellte erfindungsgemäße Transportvorrichtung kommt ohne zusätzliche Halteschienen aus. Das Klebeband 2 ist hier an den Innenseiten der Verschlussklammern 1 angebracht. Es wird durch einen Schlitz 9 in der Schiene 5 selbst abgezogen. Hierzu ist die Rolle 6 vom Vorrat gesehen jenseits der Schiene 5 angeordnet, so dass die Klammern 1 auf der Schiene bleiben, während das Band 2 nach und nach abgezogen wird.

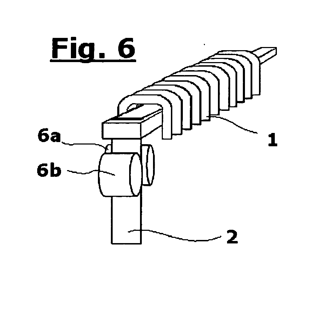

Soll das Klebeband 2 nicht aufgewickelt werden, so bietet sich alternativ die in Fig. 6 gezeigte Anordnung mit einer Doppelwalze aus zwei Rollen 6a, 6b an. Die Rollen 6a, 6b ziehen dann an dem zwischen ihnen eingeklemmten Klebeband 2.

## Patentansprüche

1. Vorrat von U-förmigen Verschlussklammern (1) für schlauchförmige Verpackungen, bei dem die Verschlussklammern (1) zu mindestens vier parallelen Reihen mit jeweils mindestens 20 über einen flexiblen Materialstreifen (2) verbundenen und mit ihren Stirnseiten zueinander fluchtend ausgerichteten Verschlussklammern (1) zusammengefasst sind, **dadurch gekennzeichnet, dass** über den flexiblen Materialstreifen (2) auch die mindestens fünf Reihen miteinander verbunden sind.

2. Vorrat nach Patentanspruch 1, **dadurch gekennzeichnet, dass** die Reihen gleich lang sind.

3. Vorrat nach einem der vorgenannten Schutzansprüche, **dadurch gekennzeichnet, dass** die Reihen jeweils die gleiche Anzahl an Verschlussklammern (1) aufweisen.

4. Vorrat nach Patentanspruch 2 oder 3, **dadurch gekennzeichnet, dass** die Verschlussklammern (1) durch Faltung des flexiblen Materialstreifens (2) so zusammengelegt sind, dass der Außenumfang des Vorrats einem geraden Prisma entspricht, dessen Höhe ein ganzzahliges Vielfaches der Länge der mit Verschlussklammern (1) bestückten Abschnitte ist.

5. Vorrat nach Patentanspruch 4, **dadurch gekennzeichnet, dass** das ganzzahlige Vielfache 1 beträgt.

6. Vorrat nach Patentanspruch 4 oder 5, **dadurch gekennzeichnet, dass** das gerade Prisma ein Quader ist.

7. Vorrat nach einem der Patentansprüche 4 bis 6, **dadurch gekennzeichnet, dass** eine Umhüllung (4) entlang des Prismenmantels vorgesehen ist.

8. Vorrat nach Patentanspruch 7, **dadurch gekennzeichnet, dass** die Umhüllung (4) durch eine Schachtel gebildet ist.

9. Vorrat nach einem der vorstehenden Patentansprüche, **dadurch gekennzeichnet, dass** der flexible Materialstreifen (2) an wenigstens einem der Enden des Vorrats mindestens 4 mm, vorzugsweise mindestens 8 mm, von der letzten Verschlussklammer (1) des Vorrats übersteht.

10. Vorrat nach einem der vorstehenden Patentansprüche, **dadurch gekennzeichnet, dass** die Reihen der Verschlussklammern (1) so angeordnet sind, dass sich jeweils zwischen den Beinen der Verschlussklammern (1) einer Reihe Beine der Verschlussklammern (1) einer benachbarten Reihe befinden.

11. Vorrat nach Patentanspruch 10, **dadurch gekennzeichnet, dass** sich mit Ausnahme randständiger Reihen zwischen den Beinen der Verschlussklammern (1) einer Reihe Beine der Verschlussklammern (1) zweier benachbarten Reihen befinden.

12. Vorrichtung zum Transport von U-förmigen Verschlussklammern (1) für schlauchförmige Verpackungen, wobei die Verschlussklammern dergestalt in einem Vorrat zusammengefasst sind, dass sie an einem flexiblen Materialstreifen (2) haften und im Fall des längsgestreckten Materialstreifens mit ihren Stirnseiten zueinander fluchtend ausgerichtet sind, wobei die Vorrichtung eine Schiene (5) zum Führen der Verschlussklammern (1) und wenigstens ein Antriebsmittel zur Ausübung einer Zugkraft auf das freie Ende des Vorrats umfasst, **dadurch gekennzeichnet, dass** das Antriebsmittel wenigstens ein Krafteinleitungsmittel umfasst, dass zur Einleitung der Zugkraft in den flexiblen Materialstreifen (2) eingerichtet ist.

13. Vorrichtung nach Patentanspruch 12, **dadurch gekennzeichnet, dass** das Krafteinleitungsmittel eine Rolle (6, 6a, 6b) umfasst.

14. Vorrichtung nach Patentanspruch 12 oder 13, **dadurch gekennzeichnet, dass** sie zum Ablösen des flexiblen Materialstreifens (2) von den Verschlussklammern (1) eingerichtet ist.

15. Vorrichtung nach Patentanspruch 14, **dadurch gekennzeichnet, dass** das Krafteinleitungsmittel so angeordnet ist, dass die Einleitung der Zugkraft in den flexiblen Materialstreifen (2) in einer vom Verlauf der Schiene abweichenden Richtung erfolgt, und Führungsmittel (7a) vorgesehen sind, die die Verschlussklammern (1), nicht aber den flexiblen Materialstreifen (2) zwingen, auf der Schiene (5) zu bleiben.

16. Vorrichtung nach Patentanspruch 14 oder 15, **dadurch gekennzeichnet, dass** eine Rolle (6) zum Aufwickeln des abgelösten flexiblen Materialstreifens (2) vorgesehen ist.

## Geänderte Patentansprüche

### Geänderte Patentansprüche gemäss Regel 137(2) EPÜ.

**1.** Vorrat von U-förmigen Verschlussklammern (1) für schlauchförmige Verpackungen, bei dem die Verschlussklammern (1) zu mindestens vier parallelen Reihen mit jeweils mindestens 20 über einen flexiblen Materialstreifen (2) verbundenen und mit ihren Stirnseiten zueinander fluchtend ausgerichteten Verschlussklammern (1) zusammengefasst sind, **dadurch gekennzeichnet, dass** über den flexiblen Materialstreifen (2) auch die mindestens vier Reihen miteinander verbunden sind.

**2.** Vorrat nach Patentanspruch 1, **dadurch gekennzeichnet, dass** die Reihen gleich lang sind.

**3.** Vorrat nach einem der vorgenannten Schutzansprüche, **dadurch gekennzeichnet, dass** die Reihen jeweils die gleiche Anzahl an Verschlussklammern (1) aufweisen.

**4.** Vorrat nach Patentanspruch 2 oder 3, **dadurch gekennzeichnet, dass** die Verschlussklammern (1) durch Faltung des flexiblen Materialstreifens (2) so zusammengelegt sind, dass der Außenumfang des Vorrats einem geraden Prisma entspricht, dessen Höhe ein ganzzahliges Vielfaches der Länge der mit Verschlussklammern (1) bestückten Abschnitte ist.

**5.** Vorrat nach Patentanspruch 4, **dadurch gekennzeichnet, dass** das ganzzahlige Vielfache 1 beträgt.

**6.** Vorrat nach Patentanspruch 4 oder 5, **dadurch gekennzeichnet, dass** das gerade Prisma ein Quader ist.

**7.** Vorrat nach einem der Patentansprüche 4 bis 6, **dadurch gekennzeichnet, dass** eine Umhüllung (4) entlang des Prismenmantels vorgesehen ist.

**8.** Vorrat nach Patentanspruch 7, **dadurch gekennzeichnet, dass** die Umhüllung (4) durch eine Schachtel gebildet ist.

**9.** Vorrat nach einem der vorstehenden Patentansprüche, **dadurch gekennzeichnet, dass** der flexible Materialstreifen (2) an wenigstens einem der Enden des Vorrats mindestens 4 mm, vorzugsweise mindestens 8 mm, von der letzten Verschlussklammer (1) des Vorrats übersteht.

**10.** Vorrat nach einem der vorstehenden Patentansprüche, **dadurch gekennzeichnet, dass** die Reihen der Verschlussklammern (1) so angeordnet sind, dass sich jeweils zwischen den Beinen der Verschlussklammern (1) einer Reihe Beine der Verschlussklammern (1) einer benachbarten Reihe befinden.

**11.** Vorrat nach Patentanspruch 10, **dadurch gekennzeichnet, dass** sich mit Ausnahme randständiger Reihen zwischen den Beinen der Verschlussklammern (1) einer Reihe Beine der Verschlussklammern (1) zweier benachbarten Reihen befinden.

**12.** Vorrichtung zum Transport von U-förmigen Verschlussklammern (1) für schlauchförmige Verpackungen, wobei die Verschlussklammern dergestalt in einem Vorrat zusammengefasst sind, dass sie an einem flexiblen Materialstreifen (2) haften und im Fall des längsgestreckten Materialstreifens mit ihren Stirnseiten zueinander fluchtend ausgerichtet sind, wobei die Vorrichtung eine Schiene (5) zum Führen der Verschlussklammern (1) und wenigstens ein Antriebsmittel zur Ausübung einer Zugkraft auf das freie Ende des Vorrats umfasst, **dadurch gekennzeichnet, dass** das Antriebsmittel wenigstens ein Krafteinleitungsmittel umfasst, dass zur Einleitung der Zugkraft in den flexiblen Materialstreifen (2) eingerichtet ist.

**13.** Vorrichtung nach Patentanspruch 12, **dadurch gekennzeichnet, dass** das Krafteinleitungsmittel eine Rolle (6, 6a, 6b) umfasst.

**14.** Vorrichtung nach Patentanspruch 12 oder 13, **dadurch gekennzeichnet, dass** sie zum Ablösen des flexiblen Materialstreifens (2) von den Verschlussklammern (1) eingerichtet ist.

**15.** Vorrichtung nach Patentanspruch 14, **dadurch gekennzeichnet, dass** das Krafteinleitungsmittel so angeordnet ist, dass die Einleitung der Zugkraft in den flexiblen Materialstreifen (2) in einer vom Verlauf der Schiene abweichenden Richtung erfolgt, und Führungsmittel (7a) vorgesehen sind, die die Verschlussklammern (1), nicht aber den flexiblen Materialstreifen (2) zwingen, auf der Schiene (5) zu bleiben.

**16.** Vorrichtung nach Patentanspruch 14 oder 15, **dadurch gekennzeichnet, dass** eine Rolle (6) zum Aufwickeln des abgelösten flexiblen Materialstreifens (2) vorgesehen ist.
